# EUROPEAN PATENT APPLICATION

(11) **EP 1 617 336 A2**
(43) Date of publication of application: **18.01.2006**
(21) Application number: 05106430.1
(22) Date of filing: 13.07.2005
(51) Int. Cl.: G06F 13/38

(54) **Apparatus and method for transferring data**

(30) Priority: 13.07.2004 KR 2004054430
(71) Applicant: SAMSUNG ELECTRONICS CO., LTD., Suwon-si Gyeonggi-do 442-742 (KR)
(72) Inventor: Koo, Jae-hoon, Gyeonggi-do (KR)
(74) Representative: Walaski, Jan Filip

(57) **Abstract**

Disclosed is a data transfer apparatus and a method using a USB module. The data transfer apparatus includes a storage for storing an image data provided from a predetermined image source; a user input unit through which a user requests to transfer the stored image data to an external host; an image coder for generating a base layer having a low frequency signal less than a predetermined frequency and a plurality of upper layers having a high frequency signal greater than the predetermined frequency, and coding the base layer and the upper layers; a communication module for transferring the coded base layer and upper layers to the external host, each in different transfer mode; and a main controller for controlling the communication module, if the user makes a transfer request through the user input unit, and thereby transferring the base layer and the upper layers to the external host. Therefore, by transferring the base layer in bulk transfer mode, it is possible to minimize a transfer error rate.

## Description

The present invention relates in general to a data transfer apparatus and method. More particularly, the present invention relates to a data transfer apparatus and a method using a USB module, wherein layers that are generated according to a scalable coding scheme are transferred to an external host by applying a different scheme for each layer according to its type.

The USB (Universal Serial Bus) standard covers data transfer techniques that have grown popular in recent years. In general, direct transmission/reception of data between USB-equipped peripheral devices is not supported, but transmission/reception of data between a host computer and peripheral devices is supported.

Data transfer techniques conforming to the USB standard are largely divided into bulk (asynchronous) transfer and isochronous transfer.

The bulk transfer mode has a built-in error detection mechanism. Thus, if data packets transferred from a peripheral device to a host have erroneous bits, the bulk transfer mode retransmits the entire packet. Thus, the bulk transfer mode is usually used in reliable data transfer.

On the other hand, the isochronous transfer mode does not generally have a built-in data reliability mechanism to perform error detection in transmitted data, but provides a high data transfer rate, compared to the bulk transfer mode. Therefore, for the transmission of data such as image, video or audio signals to or from a computer to peripherals such as a display device (for video or images), or speakers (for audio), most peripheral devices use the isochronous transfer mode.

However, most image signals transferred to a computer are usually compressed according to a scalable coding scheme. For instance, a frame is split into a plurality of layers, and at least one base layer and a plurality of upper layers are generated therefrom. Then, each layer is coded and compressed. At this time, the base layer contains the most important image data, so it is first transferred before the upper layers.

In decoding a compressed image, the base layer is decoded first, and based on this the upper layers are decoded to add image data. Therefore, if distortion exists in the base layer that is transferred in the isochronous transfer mode, the resultant image is severely distorted in spite of the fact that no errors were detected during transmission of the upper layers.

Accordingly, there is a need for a data transfer method that maintains a high bandwidth, while reliably transferring more important portions of data, such as a base layer.

The present invention aims to address the above problems. In accordance with the invention, there is provided data transfer apparatus for transferring data to an external host, comprising means for storing data, coding means for processing the data to generate a base layer and a plurality of upper layers, and means for transferring the base layer and the plurality of upper layers to the external host, wherein the base layer is transferred using a first transfer mode and the upper layers are transferred using a second transfer mode.

The means for transferring can comprise a USB link. The first transfer mode can comprise a bulk transfer mode and the second transfer mode can comprise an isochronous transfer mode.

An aspect of the present invention is to provide an apparatus and a method for transferring data using a USB module, thereby preventing transmission failure of a base layer that is generated by scalable coding schemes.

There is also provided a data transfer apparatus using a USB module, in which the apparatus comprises a storage for storing an image data provided from a predetermined image source; a user input unit through which a user requests to transfer the stored image data to an external host; an image coder for generating a base layer having a low frequency signal less than a predetermined frequency and a plurality of upper layers having a high frequency signal greater than the predetermined frequency, and coding the base layer and the upper layers; a communication module for transferring the coded base layer and upper layers to the external host, each in different transfer mode; and a main controller for controlling the communication module to transfer the base layer and the upper layers to the external host, if the user makes a transfer request through the user input unit.

Particularly, the communication module comprises a FIFO unit for temporarily storing the base layer and the plural upper layers; a communication controller for identifying the kind of the base layer and the plural upper layers that are temporarily stored, and on the basis of the identification result, selecting the transfer mode to transfer the base layer and the upper layers; and a communication interface for transferring, under the control of the communication controller, the base layer and the upper layers according to the selected transfer mode, respectively.

The communication controller controls the communication interface so that, on the basis of the identification result, the base layer is transferred in bulk transfer mode, and the upper layers is transferred in isochronous transfer mode.

The communication controller controls the communication interface so that if a transfer error signal is repeatedly sent from the external host after the base layer is transferred thereto, the base layer is retransferred a maximum number of times within the allowed limit.

Preferably, the main controller determines the size of the base layer in consideration of a predetermined transfer rate of the bulk transfer mode to ensure that an amount of coded data of the base layer is less than the transfer rate.

Moreover, the main controller controls the image coder to generate and code the base layer with the size determined by the main controller.

Preferably, the image coder codes the image data by applying one of wavelet coding scheme, MPEG, and H.264, and the communication module is a general purpose serial bus module.

Also, the image source is preferably one of a digital camera, a camcorder, and a broadcasting station providing digital broadcast signals.

Another aspect of the present invention provides a data transfer method using a USB module, the method including the steps of storing an image data provided from a predetermined image source; receiving a data transfer request for transferring the stored image data to an external host; generating from the image data a base layer having a low frequency signal less than a predetermined frequency and a plurality of upper layers having a high frequency signal greater than the predetermined frequency; coding the base layer and the plurality of upper layers; and transferring the coded base layer and upper layers in different transfer modes, respectively.

Particularly, the transferring step comprises the sub-steps of temporarily storing the coded base layer and upper layers; identifying the kind of base layer and the upper layers that are temporarily stored, and on the basis of the identification result selecting the transfer mode for the base layer and the upper layers; and transferring to the external host the base layer and the upper layers according to the selected transfer mode for each.

On the basis of the identification result, the base layer is preferably transferred in bulk (asynchronous) transfer mode, and the plurality of upper layers are transferred in isochronous transfer mode.

Preferably, the method further includes a step of, after transferring the base layer to the external host, if a transfer error signal is repeatedly sent from the external host, retransferring the base layer the maximum number of times within the allowed limit.

Also, to generate the base layer, the size of the base layer is determined in consideration of the predetermined transfer rate of the bulk transfer mode so that the amount of coded data of the base layer is less than the maximum amount of data transferable at the transfer rate.

The above aspects and features of the present invention will be more apparent by describing certain embodiments of the present invention with reference to the accompanying drawings, in which:
FIG. 1 is a schematic block diagram of a data transfer apparatus using a USB connection to an external host, according to an embodiment of the present invention;
FIG. 2 is a diagram for use in explaining a case where an image coder of FIG. 1 generates a base layer and a plurality of upper layers by using a wavelet coding scheme;
FIG. 3 is an explanatory diagram of each layer generated in FIG. 2;
FIG. 4A illustrates actual image data coded by the layer generator of FIG. 2;
FIG. 4B is a diagram showing an image of FIG. 4A in each layer after 2-level wavelet coding is applied thereto by the layer generator of FIG. 2;
FIG. 5 is a schematic block diagram of a USB transmitter module depicted in FIG. 1; and
FIG. 6 is a flow chart describing a data transfer method with the aid of an apparatus shown in FIG. 1.

Throughout the drawings, like numbers will be understood to refer to like elements feature and structures.

Certain embodiments of the present invention will be described herein below with reference to the accompanying drawings.

The matters defined in the description such as a detailed construction and elements are provided to assist in a comprehensive understanding of the invention. Thus, it is apparent that various changes and modifications to the embodiments described herein can be made without departing from the scope of the present invention as defined by the claims.

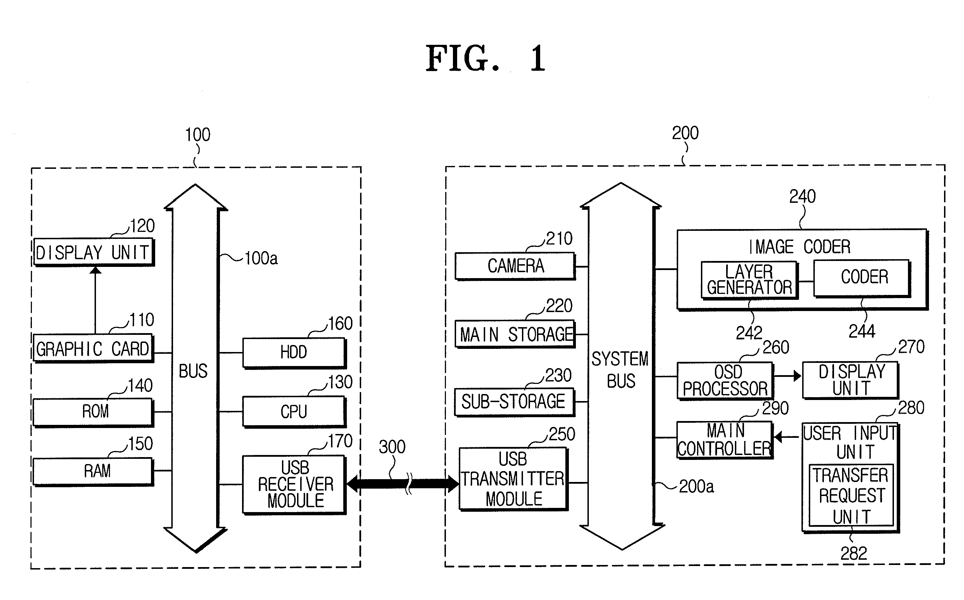

FIG. 1 is a schematic block diagram of an apparatus for transferring data using a USB connection to an external host, according to an embodiment of the present invention.

Referring to FIG. 1, the data transfer apparatus 200 of the present invention compresses image data according to a scalable coding scheme, and transfers the compressed image data to an external host 100.

The external host 100 and the data transfer apparatus 200 support the Universal Serial Bus (USB) standard for transferring data at a high rate and thus, are connected to each other through a USB transfer cable 300. Thus, the data transfer apparatus 200 transfers data provided from a designated image source to the external host 100 through the USB transfer cable 300. Then the external host 100 stores, edits, and reproduces the data transmitted from the data transfer apparatus 200.

Examples of the data transfer apparatus 200 include a variety of devices, for instance image photographing USB devices, and set-top-boxes for processing image signals. As for an exemplary external host 100, any personal computer with a USB port can be used.

In the following exemplary description, the data transfer apparatus 200 will be described based on a camcorder, and the external host 100 will be described based on a personal computer.

Referring again to FIG. 1, the external host 100 includes a graphics card 110, a display unit 120, a CPU 130, ROM 140, RAM 150, a Hard Disk Drive (hereinafter, it is referred to as 'HDD' 160, and a USB receiver module 170. A bus 100a provides a data transfer route between the above described blocks.

The graphics card 110 provides a video signal for output to the display unit 120. Particularly, the graphics card 110 processes image data transferred from the data transfer apparatus 200 to form the video signal, and outputs the video signal to the display unit 120.

The display unit 120 enables the image data provided from the graphics card 110 to be visible to viewers. Examples of the display unit include CRT (Cathode Ray Tube) monitors, LCDs (Liquid Crystal Displays), and the like.

The CPU 130, by using prestored control programs, controls overall operation of the external host 100. For instance, when the image data is transferred from the data transfer apparatus 200 through the USB receiver module 170, the CPU 130 controls the graphics card 110 and the display unit 120 to process the transferred image data and display it.

The ROM 140 is a nonvolatile memory device, and stores all kinds of control programs required for implementing the functions of the external host 100. The RAM 150 is a volatile memory device where a program to be executed by the CPU 130 is loaded, or data that is processed by the CPU 130 is stored.

The USB receiver module 170 receives data from the data transfer apparatus 200 through the USB transfer cable 300, and provides it to the RAM 150, for example. According to embodiments of present invention, the USB receiver module 170 sequentially receives a base layer and a plurality of upper layers from the data transfer apparatus 200. Here, the base layer is received in bulk transfer mode. If transfer of the base layer fails, the USB receiver module 170 sends a transfer error signal to the USB transmitter module 250.

Meanwhile, the data transfer apparatus 200 according to an embodiment of the present invention includes a camera 210, a main storage 220, a sub-storage 230, an image decoder 240, a USB transmitter module 250, an OSD processor 260, a display unit 270, a user input unit 280, and a main controller 290. A system bus 200a is a data transfer route between the blocks described above.

The camera 210 converts a light signal of a subject incident on a CCD (Charged Coupled Device) (not shown) into an electrical image signal. Hereinafter, a digital signal composed of an image signal output from the camera 210 will be referred to as image data. The image data output from the camera 210 is stored in the sub-storage 230 which will be described later.

The main storage 220 is a nonvolatile memory just like the ROM, and stores control programs for controlling overall operation of the data transfer apparatus 200.

The sub-storage 230 stores the image data output from the camera 210 in a database. The image data stored in the sub-storage 230 is developed as a moving image or still image by the external host 100 or the data transfer apparatus 200.

The image coder 240 compresses the image data stored in the sub-storage 230 by using a scalable coding scheme. To this end, the image coder 240 uses wavelet coding, H.264, DCT-based MPEG, or any other suitable coding method, to generate at least one base layer and a plurality of upper layers out of the image data, and then codes the base layer and the plurality of upper layers. Afterwards, the base layer and the plurality of upper layers are stored in a predetermined area of the sub-storage 230.

In particular, the image coder 240 codes the base layer in consideration of the transfer rate that is specified by the bulk transfer mode particularly for use in transferring the base layer to the external host 100, and the quality of an image to be transferred to the external host 100 for display. More specifically, the image coder 240 codes the base layer in such a manner that the amount of data of the coded base layer is less than the amount of data that is transferable at the transfer rate defined in the bulk transfer mode, thereby ensuring that the base layer can be smoothly transferred. The size of the base layer, or the amount of coded data, is determined by the main controller 290 in consideration of the bulk transfer mode and the image quality.

For example, when transferring a video signal in real-time, the image data in each frame is encoded so as to ensure that, on transmission, the data rate of the video signal does not exceed the data transfer rate of the bulk transfer mode.

Here, the base layer has a signal with a frequency lower than a predetermined frequency. The key image information of the image data or entropy is concentrated in this base layer. The base layer and the plural upper layers can be generated in diverse image units, such as GOP units, frame/field units and the like.

The image coder 240 preferably includes a layer generator 242 and a coder 244.
The layer generator 242 filters the image data by employing at least one low pass filter (hereinafter, it is referred to as the 'LPF') and at least one high pass filter (hereinafter, it is referred to as the 'HPF') to generate a base layer and a plurality of upper layers therefrom.

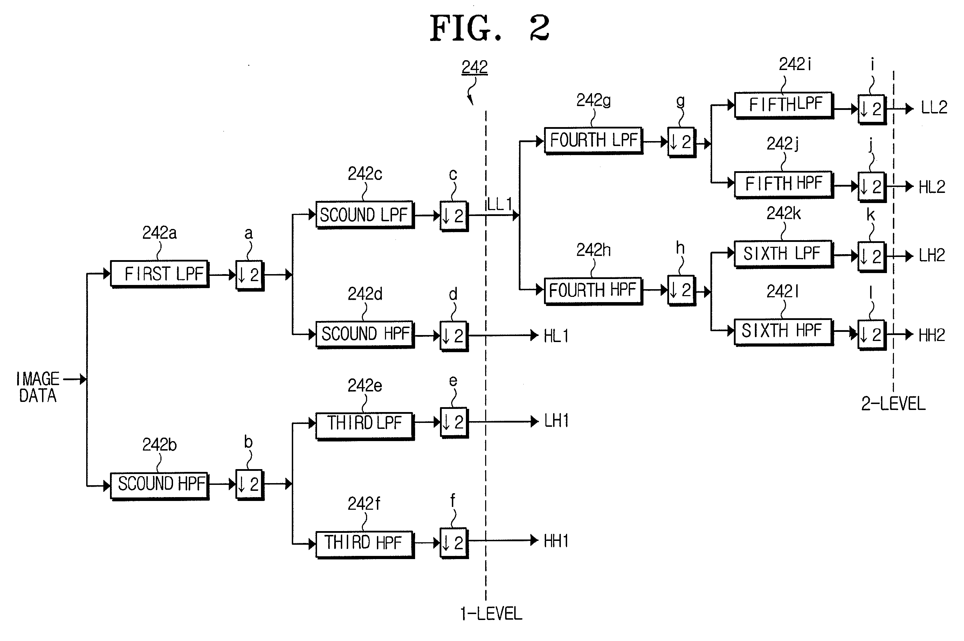

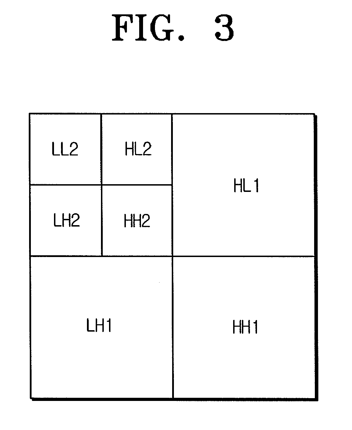

FIG. 2 is a diagram for use in explaining a case where the image coder of FIG. 1 generates a base layer and a plurality of upper layers by using a wavelet coding scheme; and FIG. 3 is an explanatory diagram of each layer generated in FIG. 2.

Referring to FIG. 2, the layer generator 242 for generating layers (such as 2-level layers) includes a first through a sixth LPF 242a, 242c, 242e, 242g, 242i, and 242k, a first through a sixth HPF 242b, 242d, 242f, 242h, 242j, and 2421, and a first through a twelfth sampler a - 1.

The first LPF 242a passes an image data inputted from the sub-storage 230, and extracts a low frequency signal (less than a 1^{st} frequency). The first HPF 242b passes the image data, and extracts a high frequency signal (greater than a 1^{st} frequency).

The second LPF 242c passes the low frequency signal outputted from the first LPF 242a, and extracts a low frequency signal LL1 (less than a 2^{nd} frequency). The second HPF 242d passes the low frequency signal outputted from the first LPF 242a, and extracts a high frequency signal HL1 (greater than a 2^{nd} frequency).

The third LPF 242e passes the high frequency signal outputted from the first HPF 242b, and extracts a low frequency signal LH1 (less than a 3^{rd} frequency). The third HPF 242f passes the high frequency signal outputted from the first HPF 242b, and extracts a high frequency signal HH1 (greater than a 3^{rd} frequency). In this manner, layers LL1, HL1, LH1, and HH1 corresponding to the 1-level layers of the image data are generated with application of the wavelet coding scheme.

Meanwhile, the fourth LPF 242g passes the low frequency signal LL1 outputted from the second LPF 242c, and extracts a low frequency signal (less than a 4^{th} frequency). The fourth HPF 242h passes the low frequency signal LL1 outputted from the second LPF 242c, and extracts a high frequency signal (greater than a 4^{th} frequency).

The fifth LPF 242i passes the low frequency signal outputted from the fourth LPF 242g, and extracts a low frequency signal LL2 (less than a 5^{th} frequency). The fifth HPF 242j passes the low frequency signal outputted from the fourth LPF 242g, and extracts a high frequency signal (greater than a 5^{th} frequency).

The sixth LPF 242k passes the high frequency signal outputted from the fourth HPF 242h, and extracts a low frequency signal LH2 (less than a 6^{th} frequency). The sixth HPF 2421 passes the high frequency signal outputted from the fourth HPF 242h, and extracts a high frequency signal (greater than a 6^{th} frequency). In this manner, layers LL2, HL2, LH2, and HH2 corresponding to the 2-level layers of the image data are generated with application of the wavelet coding scheme. Here, the base layer containing the key image information of the image data is the LL2 that has the lowest frequency. The other layers HL1, LH1, HH1, HL2, LH2, and HH2 are automatically categorized as upper layers.

The first through twelfth samplers a - 1 lower the resolution of an image two times, respectively.

FIG. 3 is obtained by using the base layer and a plurality of the upper layers of FIG. 2 to form an image. Referring to FIG. 3, the output signal from the second HPF 242d is displayed as an image in the HL1 area, the output signal from the third LPF 242e in the LH1 area, the output signal from the third HPF 242f in the HH1 area.

The LL1 area is divided by the 2-level wavelet coding scheme into LL2, HL2, LH2, and HH2 area. The output signal from the fifth LPF 242i is displayed as an image in the LL2 area, the output signal from the sixth LPF 242k in the LH2 area, and the output signal from the sixth HPF 242L in the HH2 area.

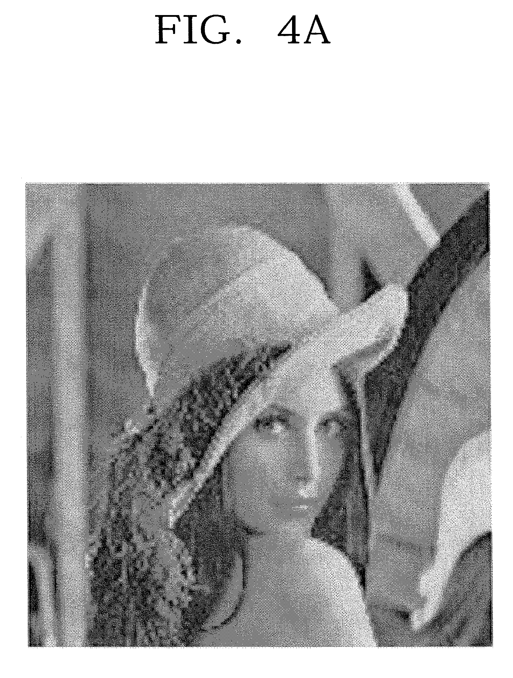

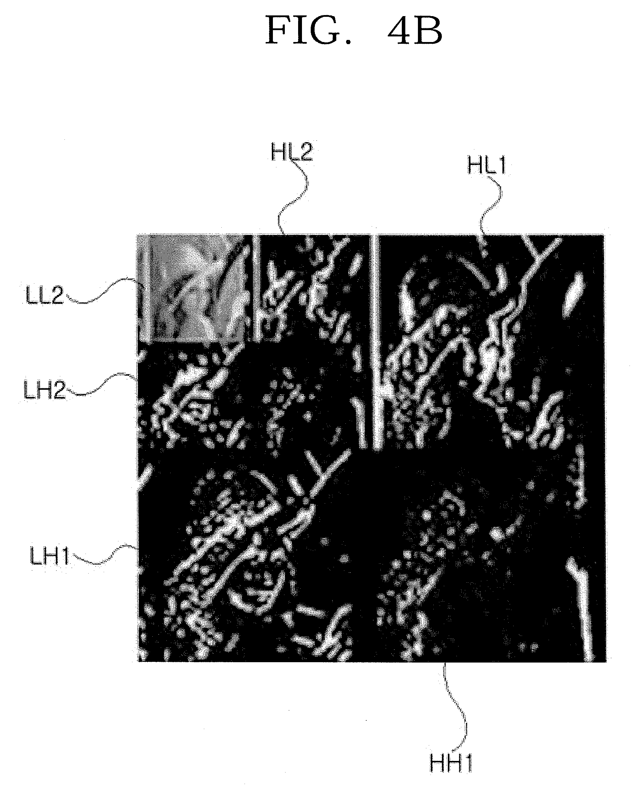

For example, when the 2-level wavelet coding is applied, with the aid of the layer generator 242 of FIG. 2, to the image data shown in FIG. 4A, an image of FIG. 4B is obtained.

To compare FIG. 4A with FIG. 4B, FIG. 4A shows an actual image data to be coded, and FIG. 4B shows an image implemented in each layer.

In FIG. 4B, the most distinctive image is shown in the LL2 area with the lowest frequency. This image becomes the base layer, and is indeed closest to the actual image data shown in FIG. 4A. Therefore, it is demonstrated that the base layer contains the key image information required for implementing the actual image data. Also, the images in the other areas besides the LL2 area are upper layers. Particularly, the image corresponding to the HH1 area has the highest frequency signal.

Referring back to FIG. 1, the coder 244 codes (or compresses) the base layer and the upper layers into a predetermined compression format. For instance, the coder 244 codes the base layer and the upper layers by employing a 'Run Length Coding' scheme. The coded base layer and upper layers are stored in a predetermined area of the sub-storage 230.

The USB transmitter module 250 used as a communication module is connected to the USB receiver module 170 of the external host 100 through the USB transfer cable 300. The USB transmitter module 250 transfers image data to the USB receiver module 170 at a high rate, and receives from the external host 100 a transfer error signal notifying that transfer of the base layer has failed.

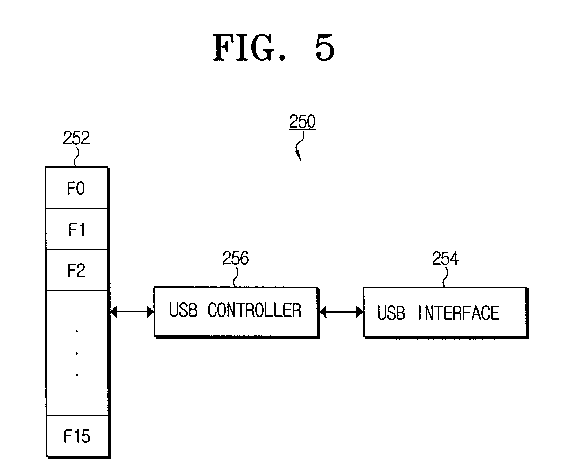

FIG. 5 is a schematic block diagram of the USB transmitter module depicted in FIG. 1.

As shown in FIG. 5, the USB transmitter module 250 includes a FIFO unit 252, a USB interface 254, and a USB controller 256.

The FIFO (First In First Out) unit 252 is divided into a plurality of temporary storage areas F0 - F15. In effect, it is sort of a buffer temporarily storing the base layer or upper layer coded by the image coder 240.

The USB interface 254 is a communication interface for transferring, under the control of the USB controller 256, the base layer or upper layer stored in the temporary storage areas of the FIFO unit 252 to the external host 100.

The USB controller 256 identifies the base layer and upper layers temporarily stored in the FIFO unit 252, and selects a transfer mode for transferring the base layer and the upper layers according to the identification result. In other words, the USB controller 256 makes sure that each of the coded layers is stored in those temporary storage areas of the FIFO unit 252, and controls the USB interface 254 to transmit the layers to the external host 100 according to the selected transfer mode.

More specifically, the USB controller 256 controls the USB interface 254, so that the base layer is transferred in the bulk transfer mode, and the upper layers in the isochronous transfer mode.

If the transfer error signal is sent from the external host 100 after the base layer was already transferred, the bulk transfer mode retransfers the base layer. This is why the base layer containing the key image information is usually transferred in the bulk transfer mode. If the transfer error signal is repeatedly sent from the external host 100, the USB controller 256 controls the USB interface 254 to retransmit the base layer as often as it is allowed.

In the meantime, the isochronous transfer mode is mostly used for transferring streaming data that requires a constant data transfer rate. Thus, the isochronous transfer mode is more useful for transferring upper layers.

Referring back to FIG. 1, the OSD processor 260 provides diverse characters and image information to be displayed on the display unit 270. In the case of the present invention, the OSD processor 260 generates a transfer error message and provides it to the display unit 270. The transfer error message is shown to a user to inform that the transfer of an image has failed. In particular, the message appears when the base layer of the image data was not transferred from the sub-storage 230 to the external host 100 despite the maximum number of retransmission attempts within the predetermined allowed limit.

The display unit 270 displays the transfer error message generated by the OSD processor 260. Also, the display unit 270 displays a message and an image urging the user to input an appropriate command required for controlling the operation of the data transfer apparatus 200.

The user input unit 280 is equipped with a plurality of function keys (not shown), through which the user is able to output to the main controller 290 a signal for setting or operating functions supported by the data transfer apparatus 200. In the present invention, the user input unit 280 further includes a transfer request unit 282, allowing the user to request the image data stored in the sub-storage 230 be transferred to the external host 100.

The main controller 290 controls overall operation of the data transfer apparatus 200, by using control programs stored in the main storage 220 and in response to the key operation signal the user inputted through the user input unit 280.

If the user selects the transfer request unit 282 to make a transfer request, the main controller 290 controls the image coder 240 and the USB transmitter module 250, so that the image data stored in the sub-storage 230 is coded (or compressed) following a predetermined scheme, and then the coded image data is transferred to the external host 100.

More specifically, after receiving a transfer request signal from the transfer request unit 282, the main controller 290 determines the size of the base layer in consideration of transfer rate that is specified in the bulk transfer mode of the USB transmitter module 250, and the quality of an image transferred to the external host 100. That is to say, the main controller 290 determines the size of the base layer, so that the amount of data of the base layer coded by the image coder 240 is less than the amount of data transferable at the transfer rate specified by the bulk transfer mode.

For example, if the amount of data of the base layer, which is generated and coded based on the 3-level wavelet coding scheme, is greater than the designated transfer rate, the main controller 290 controls the image coder 240 to generate a new base layer based on the 2-level wavelet coding scheme.

In the meantime, if the transfer of the base layer by the USB transmitter module 250 fails eventually despite the maximum number of attempts that have been made within the allowed limit, the main controller 290 controls the OSD processor 260 and the display unit 270 to generate a transfer error message and display it to the user.

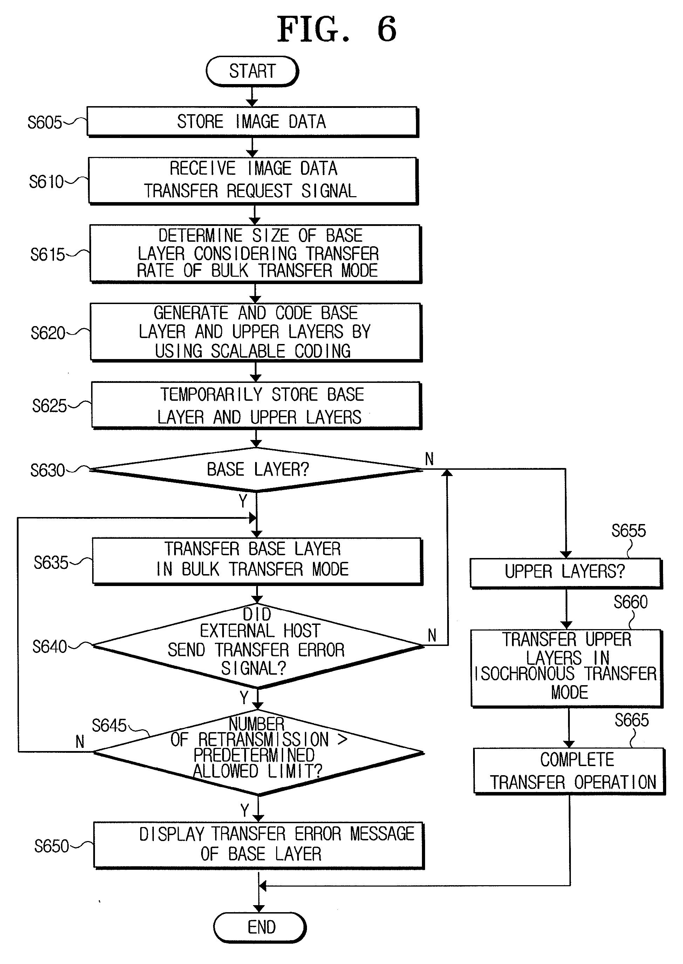

FIG. 6 is a flow chart for describing a data transfer method with the aid of the data transfer apparatus of FIG. 1.

Referring to FIG. 1 through FIG. 6, the main controller 290 controls the sub-storage 230 to store an image data provided from an image source (S605). If the transfer request unit 282 sends a transfer request signal, requesting to transfer the image data to the external host 100, the main controller 290 determines the size of the base layer in consideration of the transfer rate in bulk transfer mode (S610, S615). That is, the main controller 290 determines the size of the base layer so that the amount of coded data of the base layer is less than the amount of data transferable at the predetermined transfer rate in bulk transfer mode.

Afterwards, the main controller 290 controls the image coder 240 to generate and code a base layer and a plurality of upper layers from the image data stored in the sub-storage 230 (S620). At this time, the main controller 290 ensures that the image coder 240 generates the base layer and a plurality of upper layers with the application of scalable coding.

And, the main controller 290 controls the USB transmitter module 250, and as a result thereof, the generated base layer and the plurality of upper layers are temporarily stored in the FIFO unit 252 (S625).

When the base layer and the plurality of upper layers are stored in the FIFO unit 252, the USB controller 256 identifies which kind of layer is to be transferred (S630). If the base layer is the one to be transferred, the USB controller 256 controls the USB interface 254 to transmit the base layer in bulk transfer mode to the USB receiver module 170 of the external host 100 (S635).

However, if a transfer error signal is sent from the USB receiver module 170, the USB controller 256 decides whether the number of retransmission attempts for the base layer exceeds its allowed limit (S640, S645).

If it turns out that the number of retransmission attempts for the base layer did not exceed the allowed limit, the USB controller 256 performs steps 635 to 640, and controls the USB interface 254 to retransmit the base layer stored in the FIFO unit 252.

On the other hand, if it turns out that the number of retransmission attempts for the base layer exceeded the allowed limit, the USB controller 256 notifies the main controller 290 that the number of retransmission has exceeded the allowed limit. Thus, the main controller 290 controls the OSD processor 260 and the display unit 270 to generate a transfer error message informing that the transfer of the base layer has failed, and display the message (S650).

Meanwhile, if the layer to be transferred is identified as the plurality of upper layers in step 630, the USB controller 256 controls the USB interface 254 to transfer the plural upper layers to the USB receiver module 170 by using the isochronous transfer mode (S655, S660).

In this manner, the transfer of the base layer and the plural upper layers that are generated by the image data coder is complete (S665).

In summary, according to the data transfer apparatus and a method using the USB of the present invention, the base layer and the plural upper layers are generated by the scalable coding scheme, where the base layer is transferred to the external host in bulk transfer mode while the upper layers are transferred in isochronous transfer mode. Because the base layer is transferred in bulk transfer mode, although there might be a transfer error, it is possible to minimize the error rate by retransferring the base layer within the predetermined limit of retransfer attempts. By transferring the base layer and the upper layers in real time mode, image data with minimum distortion can be transferred to the external host.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. Data transfer apparatus for transferring data to an external host (100), comprising:
means (230) for storing data;
coding means (240) for processing the data to generate a base layer and a plurality of upper layers; and
means (250, 300) for transferring the base layer and the plurality of upper layers to the external host, wherein the base layer is transferred using a first transfer mode and the upper layers are transferred using a second transfer mode.

2. Apparatus according to claim 1, wherein the means (250, 300) for transferring comprises a USB link.

3. Apparatus according to claim 1 or 2, wherein the first transfer mode comprises a bulk transfer mode and the second transfer mode comprises an isochronous transfer mode.

4. A data transfer apparatus comprising:
a storage (230) for storing data provided from a predetermined source (210);
a user input unit (280) through which a user requests to transfer the stored data to an external host (100);
an image coder (240) for generating a base layer having a low frequency signal less than a predetermined frequency and a plurality of upper layers having a high frequency signal greater than the predetermined frequency from said stored data, and coding the base layer and the upper layers;
a communication module (250) for transferring the coded base layer and upper layers to the external host, each in a different respective transfer mode; and
a main controller (290) for controlling the communication module to transfer the base layer and the upper layers to the external host, if the user makes a transfer request through the user input unit.

5. Apparatus according to claim 4, wherein the data transfer apparatus comprises a USB module.

6. Apparatus according to claim 4 or 5, wherein the data comprises one of image data or video data.

7. Apparatus according to claim 4, 5 or 6, wherein the communication module (250) comprises:
a first-in-first-out (FIFO) unit (252) for temporarily storing the base layer and the plurality of upper layers;
a communication controller (256) for identifying the type of transfer mode associate with the base layer and the plurality of upper layers that are temporarily stored, and on the basis of the identification result, selecting the transfer mode to transfer the base layer and the upper layers, respectively; and
a communication interface (254) for transferring, under the control of the communication controller, the base layer and the upper layers according to the selected transfer mode, respectively.

8. Apparatus according to claim 7, wherein the communication controller (256) controls the communication interface (254) so that on the basis of the identification result, the base layer is transferred in bulk transfer mode, and the upper layers are transferred in isochronous transfer mode.

9. Apparatus according to claim 7 or 8, wherein the communication controller (256) controls the communication interface (254) so that if a transfer error signal is sent from the external host (100) after the base layer is transferred thereto, the base layer is retransferred.

10. Apparatus according to claim 9, wherein the base layer is retransferred a maximum number of times within an allowed limit.

11. Apparatus according to any one of claims 7 to 10, wherein the main controller determines the size of the base layer in consideration of a predetermined transfer rate of the bulk transfer mode to ensure that an amount of coded data of the base layer is less than the amount of data transferable at the transfer rate.

12. Apparatus according to any one of claims 7 to 11, wherein the main controller (290) controls the image coder (240) to generate and code the base layer with the size determined by the main controller.

13. Apparatus according to any one of claims 4 to 12, wherein the image coder (240) codes the image data by applying any one of wavelet coding scheme, MPEG, and H.264.

14. Apparatus according to any one of claims 4 to 13, wherein the communication module (250) is a general purpose serial bus module.

15. Apparatus according to any one of claims 4 to 14, wherein the predetermined source (210) is one of a digital camera, a camcorder, and a broadcasting station providing digital broadcast signals.

16. A data transfer method using a USB module, the method comprising the steps of:
storing (S605) data provided from a predetermined source (210);
receiving (S610) a data transfer request for transferring the stored data to an external host (100);
generating (S620) from the image data a base layer having a low frequency signal less than a predetermined frequency and a plurality of upper layers having a high frequency signal greater than the predetermined frequency;
coding the base layer and the plurality of upper layers; and
transferring (S635, S660) the coded base layer and upper layers in different transfer modes, respectively.

17. A method according to claim 16, wherein the data comprises one of image data or video data.

18. A method according to claim 16 or 17, wherein the transferring step comprises the sub-steps of:
temporarily storing the coded base layer and upper layers;
identifying the type of transfer modes associated with the base layer and the upper layers that are temporarily stored, and on the basis of the identification result selecting the transfer mode for the base layer and the upper layers; and
transferring to the external host (100) the base layer and the upper layers according to the selected transfer mode for each.

19. A method according to claim 18, wherein on the basis of the identification result, the base layer is transferred in bulk transfer mode, and the plurality of upper layers are transferred in isochronous transfer mode.

20. A method according to any one of claims 16 to 19, further comprising a step of:
after transferring the base layer to the external host (100), if a transfer error signal is sent from the external host, retransferring the base layer.

21. A method according to claim 20, wherein the base layer is retransferred a maximum number of times within an allowed limit.

22. A method according to claim 19, wherein to generate the base layer, a size of the base layer is determined in consideration of the predetermined transfer rate of the bulk transfer mode so that the amount of coded data of the base layer is less than the amount of data transferable at the transfer rate.

23. A method according to any one of claims 16 to 22, wherein the image data coding is performed with the application of any of wavelet coding scheme, MPEG, or H.264.

24. A method according to any one of claims 16 to 23, wherein the base layer and the plurality of upper layers are transferred by using a general purpose serial bus.
